# EUROPEAN PATENT APPLICATION

(11) **EP 4 163 131 A1**
(43) Date of publication of application: **12.04.2023**
(21) Application number: 22199605.1
(22) Date of filing: 04.10.2022
(51) Int. Cl.: B60C 19/00, B60C 19/12, B29D 30/06

(54) **PNEUMATIC TIRE AND METHOD FOR MANUFACTURING THE SAME**

(30) Priority: 06.10.2021 KR 20210132169
(71) Applicant: Kumho Tire Co., Inc., Gwangju 62392 (KR)
(72) Inventor: LEE, Donghwan, Gwangju 62392 (KR); LEE, Dae Woo, Gwangju 62392 (KR)
(74) Representative: BCKIP Part mbB

(57) **Abstract**

A pneumatic tire includes: an inner liner for maintaining a pressure of air filled inside the pneumatic tire; a sealant layer disposed on an inner peripheral surface of the inner liner; and a sound absorbing material disposed adjacent to the sealant layer. The sealant layer includes: a first sealant layer formed by a first sealant string to be disposed adjacent to at least a portion of an inner peripheral surface of the inner liner; and a second sealant layer formed by a second sealant string to be disposed adjacent to at least a portion of the first sealant layer. The second sealant layer has a width smaller than or equal to a width of the first sealant layer in an axial direction of the pneumatic tire. The sound absorbing material has a width smaller than the width of the first sealant layer in the axial direction.

## Description

### TECHNICAL FIELD

The present disclosure relates to a pneumatic tire and a method for manufacturing the same.

### BACKGROUND

In general, a tire provided in a vehicle includes a pneumatic tire filled with air. When a tread provided in the pneumatic tire is damaged while driving, an air leak occurs, which may cause a major accident. As a technology to prevent this, there are proposed a run-flat tire with sidewall reinforcement and a sealant tire in which a material with self-sealing performance is located inside the tire to seal a damaged portion.

In the case of the run-flat tire, it is possible to drive through the sidewall insert material even without air pressure, but there are disadvantages in that fuel efficiency decreases due to an increase in tire weight, and driving stability decreases due to the high rigidity of the sidewall. Accordingly, most vehicles are provided with sealant tires that compensate for the disadvantages of the run-flat tire.

The sealant tire maintains the air pressure inside the tire even if the tread is damaged by applying a sealant having self-sealing performance to the inside of the tire, and in order to additionally provide a noise reduction function of the sealant tire, a sound absorbing material is attached to the applied sealant.

The conventional sealant tire has a problem in that, due to the sound absorbing material attached to the sealant applied to the sealant tire, when the tread is damaged at a temperature lower or higher than room temperature, the self-sealing performance of the tire is deteriorated.

### SUMMARY

In view of the above, the present disclosure provides a pneumatic tire in which sufficient self-sealing performance is guaranteed even when a sound absorbing material is attached to a sealant.

In addition, the present disclosure provides a pneumatic tire whose self-sealing performance at a temperature lower or higher than room temperature is the same as the self-sealing performance at the room temperature.

In accordance with a first aspect of the present disclosure, there is provided a pneumatic tire including: an inner liner for maintaining a pressure of air filled inside the pneumatic tire; a sealant layer disposed on an inner peripheral surface of the inner liner; and a sound absorbing material disposed adjacent to the sealant layer, wherein the sealant layer includes: a first sealant layer formed by a first sealant string to be disposed adjacent to at least a portion of an inner peripheral surface of the inner liner; and a second sealant layer formed by a second sealant string to be disposed adjacent to at least a portion of the first sealant layer, the second sealant layer having a width smaller than or equal to a width of the first sealant layer in an axial direction of the pneumatic tire, and wherein the sound absorbing material has a width smaller than the width of the first sealant layer in the axial direction.

The first sealant layer may be formed by arranging the first sealant string in a plurality of loop shapes.

The width of the first sealant layer may be 60% to 90% of a width of the pneumatic tire, and a thickness of the first sealant layer in a radial direction of the pneumatic tire may be 1.5 mm to 6 mm.

A thickness of the sound absorbing material in a radial direction of the pneumatic tire may be greater than any one of a thickness of the first sealant layer and a thickness of the second sealant layer in the radial direction.

In accordance with a second aspect of the present disclosure, there is provided a method of manufacturing a pneumatic tire, the method including: providing an inner liner to maintain a pressure of air filled in the pneumatic tire; forming a sealant layer on an inner peripheral surface of the inner liner; and arranging a sound absorbing material adjacent to the sealant layer, wherein the forming the sealant layer includes: forming a first sealant layer with a first sealant string to be disposed adjacent to at least a portion of an inner peripheral surface of the inner liner; and forming a second sealant layer with a second sealant string to be disposed adjacent to at least a portion of the first sealant layer, the second sealant layer having a width smaller than a width of the first sealant layer in an axial direction of the pneumatic tire, and wherein the sound absorbing material has a width smaller than the width of the first sealant layer in the axial direction.

In the pneumatic tire according to one embodiment of the present disclosure, sufficient self-sealing performance is secured even when the sound absorbing material is disposed adjacent to the sealant layer.

In addition, the pneumatic tire has, at a temperature lower or higher that the room temperature, the same self-sealing performance as the self-sealing performance at the room temperature.

### BRIEF DESCRIPTION OF THE DRAWINGS

FIG. 1 is a partial cross-sectional view of a pneumatic tire according to one embodiment of the present disclosure.
FIG. 2 is a flowchart schematically illustrating a method of manufacturing the pneumatic tire according to one embodiment of the present disclosure.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'disposed' at, 'applied' to, 'released' from, or 'contacted' with another element, it should be understood that the element may be directly 'disposed' at, 'applied' to, 'released' from, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

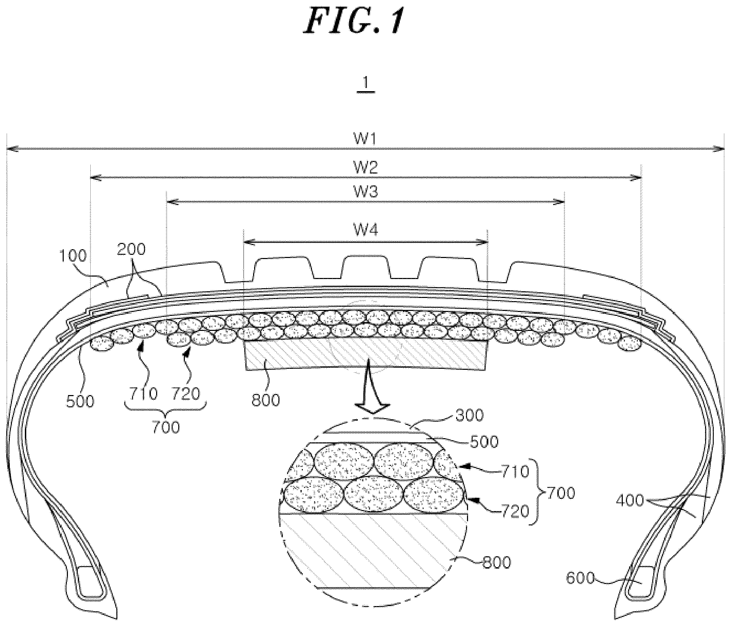

The 'radial direction' described below means the radial direction of the tire and the vertical direction in FIG. 1, and the 'axial direction' means a direction orthogonal to the radial direction and parallel to the rotation axis of the tire, and the left and right direction in FIG. 1. Accordingly, the radially outer side means the upper side, and the radially inner side means the lower side. The axially outer side means the right side, and the axially inner side means the left side. On the other hand, unless otherwise mentioned, the above directions include both positive and negative directions. In addition, 'width' means a width in an axial direction, and 'thickness' means a thickness in a radial direction.

Hereinafter, a specific configuration of a pneumatic tire 1 according to one embodiment of the present disclosure will be described with reference to the drawings.

Referring to FIG. 1, the pneumatic tire 1 according to one embodiment of the present disclosure may be mounted to a vehicle and may be in contact with the ground. In addition, the pneumatic tire 1 is capable of preventing air filled in the pneumatic tire 1 from being leaked even when it is damaged by a sharp material placed on the ground during driving. The pneumatic tire 1 may include a tread 100, a belt 200, a carcass 300, a sidewall 400, an inner liner 500, a bead part 600, a sealant layer 700, a sound absorbing material 800, and a controller (not shown).

The tread 100 is disposed at the outermost side of the pneumatic tire 1 to be in direct contact with the ground. A plurality of grooves may be provided on an outer peripheral surface of the tread 100 to adjust driving force, braking force, or turning force of the pneumatic tire 1. In addition, the groove may be provided to be depressed in a predetermined depth from the outer peripheral surface of the tread 100. The shapes of the grooves may be set in various patterns suitable for the use of the pneumatic tire 1.

The belt 200 is disposed between the tread 100 and the carcass 300 and may disperse an impact applied to the tread 100 from the outside. The belt 200 may be positioned at the inner side of the tread 100 in the radial direction and disposed at the outer side of the carcass 300 in the radial direction.

The carcass 300 may be provided to form a frame of the pneumatic tire 1 and may be made of a metal, a synthetic fiber, and the like. The carcass 300 refers to a cord layer inside the pneumatic tire 1, and serves to support a load and absorb impact. Therefore, the carcass 300 may be made of a material with strong fatigue resistance against flexing and stretching. In addition, the carcass 300 may be positioned at the inner side of the belt 200 and at the outer side of the inner liner 500 in the radial direction.

The sidewall 400 may be provided on both sides of the tread 100 in the axial direction of the pneumatic tire 1, and may protect the side surface of the tire. The outer side of the sidewall 400 in the radial direction is connected to the tread 100, and the inner side of the sidewall 400 in the radial direction may be formed to surround the bead part 600. The sidewall 400 may be made of a cross-linked rubber having excellent cut resistance and light resistance.

The inner liner 500 may be provided to maintain the pressure of the air filled inside the pneumatic tire 1. In other words, the inner liner 500 may prevent the air in the pneumatic tire 1 from leaking out. The inner liner 500 may be disposed at the innermost side of the pneumatic tire 1 and may be formed of a non-porous material. For example, the inner liner 500 may be formed of butyl rubber having high density.

The bead part 600 may provide a portion in which the pneumatic tire 1 is coupled to a rim (not shown), and may provide rigidity for fixing the pneumatic tire 1 to the rim. In addition, the bead part 600 may prevent the pneumatic tire 1 from being separated from the rim. The bead part 600 may include one or more wires, cords, or cores. For example, the bead part 600 may be formed of a wire bundle.

The sealant layer 700 may prevent air filled in the pneumatic tire 1 from leaking out. For example, the sealant layer 700 may seal a hole which is generated by a sharp material on the ground to penetrate at least one of the tread 100, the belt 200, the carcass 300, and the inner liner 500. For example, the sealant layer 700 may seal the hole penetrating at least one of the tread 100, the belt 200, the carcass 300, and the inner liner 500 at -30°C to 50°C.

The sealant layer 700 may include a plurality of layers. The sealant layer 700 may be disposed on an inner peripheral surface of the inner liner 500. In other words, the sealant layer 700 may be disposed at the inner side of the inner liner 500 in the radial direction. The sealant layer 700 may be symmetrical with respect to a virtual plane that passes through the center of the pneumatic tire 1 and extends parallel to the radial direction.

The sealant layer 700 may be formed by a sealant string applied on the inner peripheral surface of the inner liner 500. The sealant may include carbon black, a mixing agent, an adhesive, an anti-aging agent, a process oil, sulfur, the first polybutene, the second polybutene, and peroxide. For example, based on 100 parts by weight of butyl rubber, the sealant may include 40 to 50 parts by weight of carbon black, 15 to 20 parts by weight of mixing agent, 2 to 5 parts by weight of adhesive, 0.1 to 0.5 parts by weight of anti-aging agent, 15 to 20 parts by weight of process oil, 1 to 1.5 parts by weight of sulfur, 100 to 120 parts by weight of the first polybutene having a number average molecular weight of 1300, 200 to 240 parts by weight of the second polybutene having a number average molecular weight of 2400, and 5 to 10 parts by weight of peroxide. The sealant layer 700 may include a first sealant layer 710 and a second sealant layer 720. The adhesive strength of the sealant may be, for example, 1,000 gf/mm to 10,000 gf/mm. Further, the viscosity of the sealant may be, for example, 50,000 Pa·s to 300,000 Pa·s at 45°C. Furthermore, the sealant string may include a first sealant string forming the first sealant layer 710 and a second sealant string forming the second sealant layer 720. In addition, the first sealant and the second sealant may be different from each other or may be the same.

The first sealant layer 710 may be formed by the first sealant string having a plurality of loops arranged adjacent to each other along the axial direction. The plurality of loops may be separate loops independently formed from each other, or may be formed to be continuously connected to each other like a screw shape. The plurality of loops provided by the first sealant strings may be arranged to contact each other. In addition, a plurality of grooves may be provided inside between the plurality of loops.

The first sealant layer 710 may be disposed adjacent to at least a portion of the inner peripheral surface of the inner liner 500. For example, the first sealant layer 710 may be disposed to face the inner liner 500. The first sealant layer 710 may be formed by a first sealant applied to at least a portion of the inner peripheral surface of the inner liner 500. For example, one side surface of the first sealant layer 710 may be placed in contact with the inner peripheral surface of the inner liner 500.

A width W2 of the first sealant layer 710 may be smaller than a width of the inner liner 500. For example, the width W2 of the first sealant layer 710 may be 70% to 95% of the width of the inner liner 500. Further, the width W2 of the first sealant layer 710 may be, for example, 60% to 90% of a width W1 of the pneumatic tire 1. In addition, a thickness of the first sealant layer 710 in the radial direction may be, for example, 1.5 mm to 6 mm.

The second sealant layer 720 may be formed by the second sealant string having a plurality of loops arranged adjacent to each other along the axial direction. The plurality of loops may be separate loops independently formed from each other, or may be formed to be continuously connected to each other like a screw shape.

The second sealant layer 720 may be disposed adjacent to at least a portion of the first sealant layer 710. The second sealant layer 720 may be formed by being arranged in a plurality of loop shapes in a predetermined number of grooves among the plurality of grooves provided by the first sealant string. The second sealant layer 720 may be disposed to face at least one of the first sealant layer 710 and the inner liner 500. The second sealant layer 720 may be formed by a second sealant applied to at least a portion of the first sealant layer 710. For example, the second sealant layer 720 may be placed in contact with the other side surface of the first sealant layer 710. The other side surface of the first sealant layer 710 may be a side surface opposite to the one side surface of the first sealant layer 710.

A width W3 of the second sealant layer 720 may be smaller than the width of the inner liner 500. For example, the width W3 of the second sealant layer 720 may be 30% to 95% of the width of the inner liner 500. Furthermore, the width W3 of the second sealant layer 720 may be less than or equal to the width W2 of the first sealant layer 710. For example, the width W3 of the second sealant layer 720 may be 50% to 100% of the width W2 of the first sealant layer 710.

In addition, the width W3 of the second sealant layer 720 may be, for example, 30% to 90% of the width W1 of the pneumatic tire 1. Further, a thickness of the second sealant layer 720 may be, for example, 1.5 mm to 6 mm. However, the present disclosure is not limited thereto, and the thickness of the second sealant layer 720 may be different from the thickness of the first sealant layer 710.

The sound absorbing material 800 may reduce noise generated from the pneumatic tire 1 during driving. The sound absorbing material 800 may be, for example, polyurethane foam. The sound absorbing material 800 may be disposed adjacent to the second sealant layer 720. In addition, a width W4 of the sound absorbing material 800 may be smaller than at least one of the width W2 of the first sealant layer 710 and the width W3 of the second sealant layer 720. For example, the width W4 of the sound absorbing material 800 may be 50% to 65% of the width W2 of the first sealant layer 710. As another example, the width W4 of the sound absorbing material 800 may be 70% to 85% of the width W3 of the second sealant layer 720.

A thickness of the sound absorbing material 800 may be greater than at least one of the thickness of the first sealant layer 710 and the thickness of the second sealant layer 720. For example, the thickness of the sound absorbing material 800 may be greater than the sum of the thicknesses of the first sealant layer 710 and the second sealant layer 720. The thickness of the sound absorbing material 800 may be, for example, 20 mm to 35 mm.

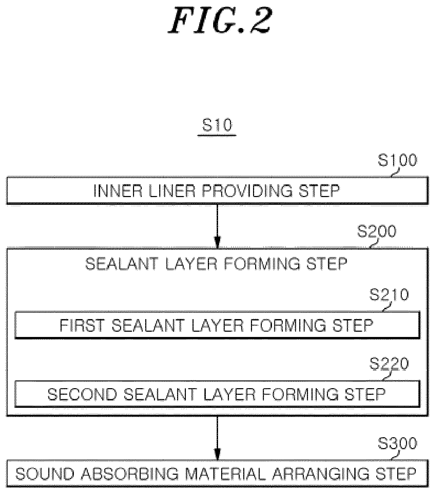

Hereinafter, a method S10 of manufacturing the pneumatic tire according to one embodiment of the present disclosure will be described with reference to FIG. 2. In describing the method S10 of manufacturing the pneumatic tire, differences compared with the above-described embodiment will be mainly described, and the same description and reference numerals as those in the above-described embodiment will be referred to.

The method S10 of manufacturing the pneumatic tire may include an inner liner providing step S100, a sealant layer forming step S200, and a sound absorbing material arranging step S300.

In the inner liner providing step S 100, the inner liner 500 for maintaining the pressure of air filled in the pneumatic tire may be provided.

In the sealant layer forming step S200, the sealant layer 700 may be formed to be disposed on the inner peripheral surface of the inner liner 500. The sealant layer forming step S200 may include a first sealant layer forming step S210 and a second sealant layer forming step S220.

In the first sealant layer forming step S210, the first sealant layer 710 may be formed by applying the first sealant string to at least a portion of the inner peripheral surface of the inner liner 500. In addition, the first sealant layer forming step S210 may be performed in a state in which the pneumatic tire 1 is mounted on a jig (not shown) that rotates the pneumatic tire 1 with the center thereof fixed.

In addition, in the first sealant layer forming step S210, the jig and a nozzle (not shown) may be controlled so that the first sealant string is applied to the inner peripheral surface of the inner liner 500 as the pneumatic tire 1 is rotated. For example, the controller may control the jig and the nozzle so that the first sealant string is arranged in a plurality of loop shapes.

For example, in the first sealant layer forming step S210, when the pneumatic tire 1 rotates at a speed of 60 rpm or more, the jig and the nozzle may be controlled so that the first sealant string is applied to the inner liner 500 at a flow rate of 150 cc per minute to 600 cc per minute.

The temperature of the end part of the nozzle may be 150°C to 200°C, for example. At least one of the first sealant string and the second sealant string may be ejected from the end part of the nozzle.

In addition, the jig and the nozzle may be controlled by the controller. For example, the controller may control the jig and the nozzle so that the first sealant string is arranged in a plurality of loop shapes.

In the second sealant layer forming step S220, the second sealant layer 720 may be formed by applying the second sealant string to at least a portion of the other side surface of the first sealant layer 710. In addition, the second sealant layer forming step S220 may be performed in a state in which the pneumatic tire 1 is mounted on the jig that rotates the pneumatic tire 1 with the center thereof fixed.

In addition, in the second sealant layer forming step S220, the jig and the nozzle may be controlled so that the second sealant is applied by the nozzle to a predetermined number of grooves among the plurality of grooves as the pneumatic tire 1 is rotated. For example, the controller may control the jig and the nozzle so that the first sealant string is arranged in a plurality of loop shapes by the nozzle in the predetermined number of grooves among the plurality of grooves.

For example, in the second sealant layer forming step S220, when the pneumatic tire 1 rotates at a speed of 60 rpm or more, the jig and the nozzle may be controlled such that the second sealant string is applied to the first sealant layer 710 at a flow rate of 150 cc per minute to 600 cc per minute. In addition, in the second sealant layer forming step S220, the second sealant may be applied to the first sealant layer 710 in a state in which the end of the nozzle contacts the first sealant layer 710 at a predetermined position adjacent to the first sealant layer 710.

In the sound absorbing material arranging step S300, the sound absorbing material 800 may be disposed adjacent to the sealant layer 700.

Hereinafter, an effect of the pneumatic tire 1 according to one embodiment of the present disclosure will be described.

The pneumatic tire 1 according to one embodiment of the present disclosure can self-seal a hole, which is generated by a sharp material on the ground to penetrate at least one of the tread 100, the belt 200, the carcass 300, and the inner liner 500, thereby preventing the air pressure in the pneumatic tire 1 from decreasing.

In addition, the pneumatic tire 1 can maintain the internal air pressure even if the pneumatic tire 1 is damaged, which increases driving stability of a vehicle equipped with the pneumatic tire 1.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A pneumatic tire comprising:
an inner liner for maintaining a pressure of air filled inside the pneumatic tire;
a sealant layer disposed on an inner peripheral surface of the inner liner; and
a sound absorbing material disposed adjacent to the sealant layer,
wherein the sealant layer includes:
a first sealant layer formed by a first sealant string to be disposed adjacent to at least a portion of an inner peripheral surface of the inner liner; and
a second sealant layer formed by a second sealant string to be disposed adjacent to at least a portion of the first sealant layer, the second sealant layer having a width smaller than or equal to a width of the first sealant layer in an axial direction of the pneumatic tire, and
wherein the sound absorbing material has a width smaller than the width of the first sealant layer in the axial direction.

2. The pneumatic tire of claim 1, wherein the first sealant layer is formed by arranging the first sealant string in a plurality of loop shapes.

3. The pneumatic tire of claim 1 or 2, wherein the width of the first sealant layer is 60% to 90% of a width of the pneumatic tire, and a thickness of the first sealant layer in a radial direction of the pneumatic tire is 1.5 mm to 6 mm.

4. The pneumatic tire of any one of claims 1 to 3, wherein a thickness of the sound absorbing material in a radial direction of the pneumatic tire is greater than any one of a thickness of the first sealant layer and a thickness of the second sealant layer in the radial direction.

5. A method of manufacturing a pneumatic tire, the method comprising:
providing an inner liner to maintain a pressure of air filled in the pneumatic tire;
forming a sealant layer on an inner peripheral surface of the inner liner; and
arranging a sound absorbing material adjacent to the sealant layer,
wherein the forming the sealant layer includes:
forming a first sealant layer with a first sealant string to be disposed adjacent to at least a portion of an inner peripheral surface of the inner liner; and
forming a second sealant layer with a second sealant string to be disposed adjacent to at least a portion of the first sealant layer, the second sealant layer having a width smaller than a width of the first sealant layer in an axial direction of the pneumatic tire, and
wherein the sound absorbing material has a width smaller than the width of the first sealant layer in the axial direction.
